Europäisches Patentamt

European Patent Office

Office européen des brevets

(19)

(11) Publication number: **0 290 234**
**B1**

(12)

# EUROPEAN PATENT SPECIFICATION

(45) Date of publication of the patent specification:
24.10.90

(51) Int. Cl.⁵: **B60R 1/06**

(21) Application number: 88304025.5

(22) Date of filing: 04.05.88

(54) Breakaway mirror retention means.

(30) Priority: 04.05.87 AU 1721/87

(43) Date of publication of application:
09.11.88 Bulletin 88/45

(45) Publication of the grant of the patent:
24.10.90 Bulletin 90/43

(84) Designated Contracting States:
DE ES FR GB

(56) References cited:
EP-A- 0 073 289
DE-A- 2 436 339
DE-A- 2 856 612
DE-A- 3 432 183
DE-A- 3 434 959
GB-A- 2 071 035

(73) Proprietor: BRITAX RAINSFORDS PTY. LTD., Sherrifs
Road, Lonsdale South Australia(AU)

(72) Inventor: Fimeri Garry Gordon Leslie, 22 Golflands View,
Morphett Vale, South Australia(AU)

(74) Representative: Hollinghurst, Antony, Britax Limited
Patent Department, Chichester West Sussex
PO19 2AQ(GB)

## Description

This invention relates to a rear vision mirror assembly of the break-away type, having a mounting base base portion connected to a pivoted portion by pivot means comprising projecting lugs on one portion which releasably engage socket portions of the other portion and a spring extending between said portions urging said lugs into engagement with said socket portions; the pivoted portion comprising a cover, a mirror backing plate, universal pivot means between the cover and backing plate, a mirror on the backing plate, a control lever guide on the backing plate which extends towards the base portion; and the base portion comprising a socket wall, a control lever having a lever arm extending through the socket wall and carrying a ball intermediate its ends which bears against said socket wall.

A mirror assembly of the type is disclosed in DE-A 3 434 959. The head on the control lever disengages from the control lever guide during breakaway and a separate guide member is used to ensure re-engagement.

According to the invention, in a mirror assembly of the type described above, the control lever guide has retaining portions adjacent its end, and a head on an end of said lever arm is freely movable in said guide but retained therein by walls thereof and said retaining portions.

An embodiment of the invention is described below with reference to the accompanying drawings in which:

Figure 1 is a diagrammatic elevation of a break-away rear vision mirror assembly with the mirror and its backing plate removed;

Figure 2 is a section on line 2–2 of Figure 1;

Figure 3 is a fragmentary view similar to Figure 1, showing the pivoted portion deflected upwardly;

Figure 4 is a view similar to Figure 2 but with the pivoted portion deflected rearwardly; and Figure 5 is a section on line 5–5 of Figure 4 but drawn to a larger scale.

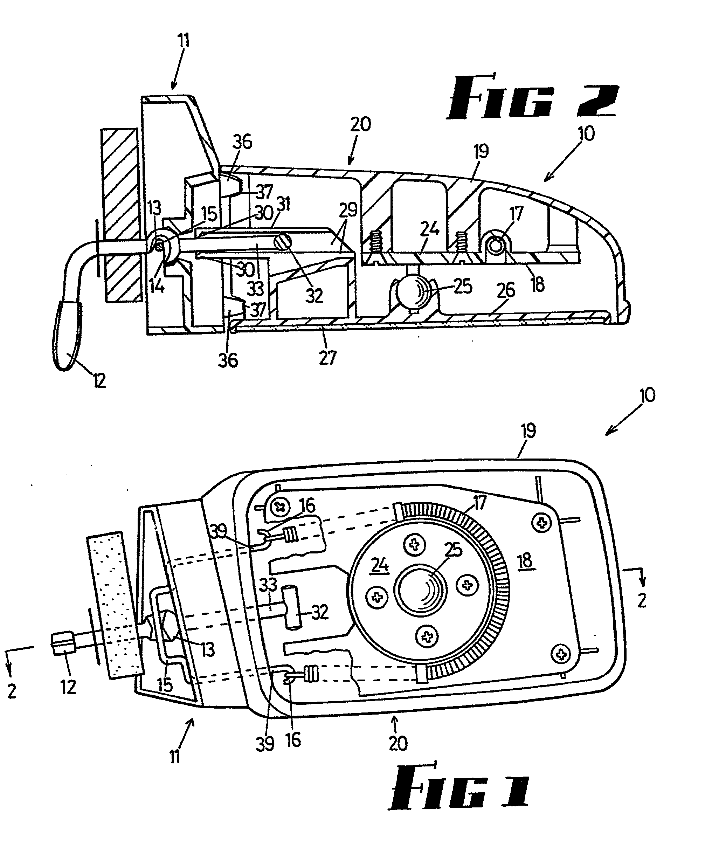

The drawings show a break-away rear vision mirror assembly comprising a mounting base portion 11 which is arranged to be secured to an external panel of a vehicle, and has projecting inwardly therefrom a control lever 12. The control lever 12 has a ball 13 which is urged into engagement with a wall of a socket 14 by means of a saddle 15 which has two hook ends 16 coupled to respective ends of a U-shaped spring 17 which is carried and guided by arcuate spring track walls in a spring plate 18 secured to a cover 19 of a pivoted portion 20 of mirror assembly 10. The spring track walls guide the spring for only its curved portion, as shown in Figure 1, so that, on break-away, the ends of the spring can change position.

The pivoted portion 20 comprises a support plate 24 also secured to the cover 19 and having a universal mounting ball 25 on which is mounted a mirror backing plate 26 for universal pivotal movement, the backing plate 26 supporting a mirror 27.

The mirror backing plate 26 however is monolithic with a guide for the control lever, which comprises channel walls 29 (not shown in Figure 1) which terminate at their mounting base ends in inturned nibs 30. The walls 29 have flanges 31 extending along their outer edges, so that the channel is narrow-mouthed, and the flanges 31 and inturned nibs 30 prevent withdrawal of a T-head 32 on inner end of arm 33 of the control lever 12. (The ball 13 is an arm 33). This will positively retain the pivoted portion 20 of the mirror assembly to the control lever 12 under all conditions of deflection other than severe impact or disintegration of the assembly.

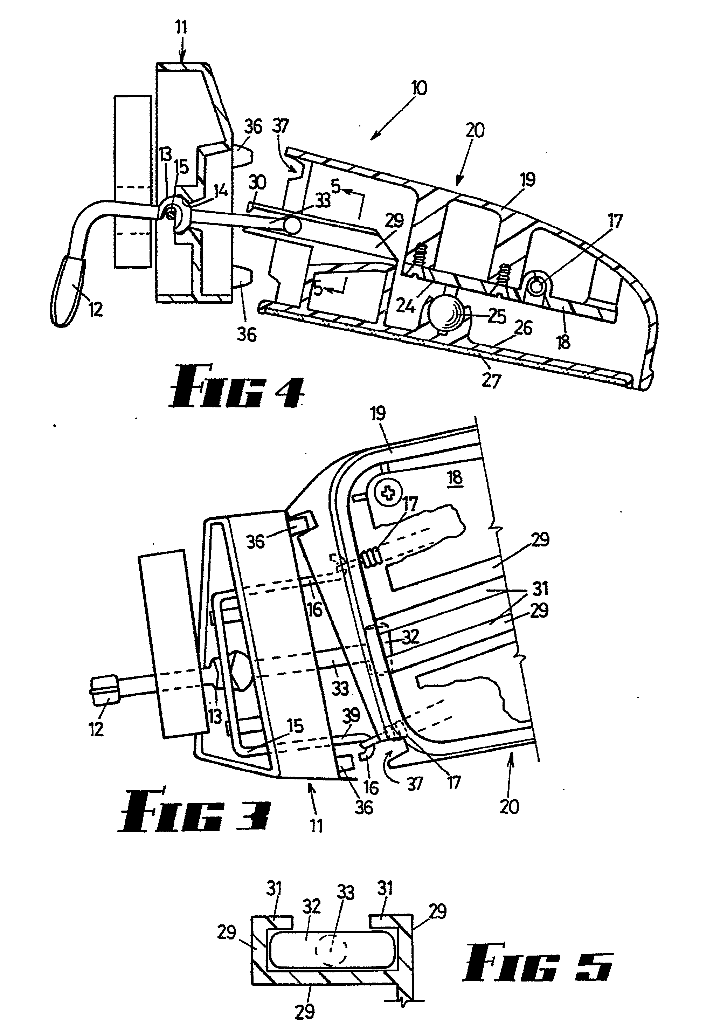

The mounting base portion 11 is provided with four outwardly projecting V-shaped locating lugs 36 (not shown in Figure 2) and these enter correspnding sockets 37 at the mounting end of the pivoted portion 20, the sockets 37 being in the cover walls. The pivoted portion 20 is retained in its normal position by means of the Ushaped spring 17 which extends through the adjacent walls of the mounting base 11 and cover 19, and engage the saddle 15, which can (in some instances) be a length of thick wire.

However, in this embodiment, as more particularly shown in Figure 1, the saddle 15 has legs 39 which extend through large apertures in the mounting base portion 11 so that they can tilt. Because the spring 17 is tensioned upon deflection, the mirror assembly is guided back to its correct position so that the locating lugs 36 re-enter the sockets 37. The spring 17, the Thead 32 and channel walls 29, and the legs 39 all perform part of the guide function.

Although the invention will be seen to be very simple, it nevertheless results in an effective repositioning of the mirror assembly under a much wider range of conditions than exists with prior art mirror assemblies.

## Claims

1. A rear vision mirror assembly of the break-away type, having a mounting base portion (11) connected to a pivoted portion (20) by pivot means comprising projecting lugs (36) on one portion (11) which releasably engage socket portions (37) of the other portion (20), and a spring (17) extending between said portions (11, 20) urging said lugs (36) into engagement with said socket portions (37); the pivoted portion (20) comprising a cover (19), a mirror backing plate (26), universal pivot means (25) between the cover (19) and backing plate (26), a mirror (27) on the backing plate (26) and a control lever guide (29) on the backing plate (26) which extends towards the base portion (11); and the base portion (11) comprising a socket wall (14), a control lever (12) having a lever arm (33) extending through the socket wall (14), a control lever (12) having a lever arm (33) extending through the socket wall (14) and carrying a ball (13) intermediate its ends which bears against said socket wall (14); characterised in that the control lever guide (29) has retaining portions (30, 31) adjacent its end, and a head (32) on an end of said lever arm (33) is freely movable in said guide (29) but retained therein by walls thereof and said retaining portions (30, 31).

2. A mirror assembly according to claim 1, wherein said control lever guide (29) comprises a plurality of channel walls (31) which define a narrow mouth channel, and said retaining portions comprise inturned nibs (30) on respective ends of some of said walls (31).

3. A mirror assembly according to claim 2, wherein said head is a T-head (32) freely movable within said channel (29).

4. A mirror assembly according to claim 1, 2 or 3, wherein said lever arm ball (13) carries a transversely extending saddle (15), and said spring is a U-shaped spring (17), a spring engaging surface (18) on said pivoted portion (20) engaging and guiding an intermediate part of said spring (17) and ends (16) of said spring (17) being coupled to ends of said saddle (15).

5. A mirror assembly according to claim 4, wherein said saddle (15) is U-shaped, having legs (39) guided for movement in said mounting base portion (11), said spring being coupled to the ends of said legs.

6. A mirror assembly according to claim 5, wherein guidance of the pivoted portion (20) after breakaway is effected partly by each of said T-head (32), said channel walls (29, 31), said spring (17 and said saddle legs (39).

## Patentansprüche

1. Ein einklappbarer Rückspiegelaufbau mit einem Montagefuß (11), das mit einem Schwenkteil (20) durch Schwenkmittel verbunden ist, wobei die Schwenkmittel vorstehende Zapfen (36), die lösbar mit Fassungen (37) auf dem anderen Teil in Eingriff stehen, und eine Feder (17) aufweisen, die sich zwischen den Teilen (11, 20) erstreckt und die Zapfen (36) in Eingriff mit den Fassungen (37) hält; weiterhin mit dem Schwenkteil (20), das ein Gehäuse (19), eine Spiegelrückplatte (26), ein Universalgelenk (25) zwischen dem Gehäuse (19) und der Rückplatte (26), einen Spiegel (27) auf der Rückplatte (26) und eine Einstellhebelführung (29) auf der Rückplatte (26), die sich in Richtung des Fußteils (11) erstreckt, enthält: und mit dem Fußteil (11), das eine Fassungswand (14), einen Einstellhebel (12), mit einem Hebelarm (33), der durch die Fassungswand (14) hindurchführt, einen Einstellhebel (12) mit einem Hebelarm (33), der durch die Aufnehmerwand (14) hindurchführt und der zwischen seinen Enden eine Kugel (13) trägt, die an der Fassungswand (14) anliegt, enthält, dadurch gekennzeichnet, daß die Hebelführung (29) nahe ihres Endes Führungsabschnitte (30, 31) besitzt und daß ein Kopfteil (32) an einem Ende des besagten Hebelarms (33) frei bewegbar in der Führung (29) ist, jedoch darin durch deren Wände und durch die Führungsabschnitte (30, 31) gehalten ist.

2. Ein Spiegelaufbau nach Anspruch 1, wobei die Einstellhebelführung (29) mehrere Kanalwände (31), die einen schmalen Mündungskanal bilden, enthält, und wobei die Führungsabschnitte nach innen gerichtete Nasen (30) auf den jeweiligen Enden einiger der Wände (31) aufweisen.

3. Ein Spiegelaufbau nach Anspruch 2, wobei der Kopf ein T-förmiger Kopf (32) ist, der innerhalb des besagten Kanals (29) frei bewegbar ist.

4. Ein Spiegelaufbau nach Anspruch 1, 2 oder 3, wobei die Hebelarmkugel (13) einen sich quer erstreckenden Sattel (15) trägt und die Feder eine U-förmige Feder (17) ist, wobei eine Federeingriffsfläche (18) auf dem Schwenkteil (20) mit einem mittleren Teil der Feder (17) in Eingriff steht und dieselbe führt und wobei die Enden (16) der Feder (17) mit den Enden des Sattels (15) gekoppelt sind.

5. Ein Spiegelaufbau nach Anspruch 4, wobei der Sattel (15) U-förmig ist und Fußteile (39) aufweist, die für eine Bewegung in dem Montagefußteil (11) geführt sind, und wobei die Feder mit den Enden der Fußteile gekoppelt ist.

6. Ein Spiegelaufbau nach Anspruch 5, wobei die Führung des Schwenkteils (20) nach dem Einklappen teils durch jeden der T-förmigen Kopfteile (32), teils durch die Kanalwände (29, 31), die Feder (17) und die Sattelfußteile (39) bewirkt wird.

## Revendications

1. Un ensemble de miroir rétroviseur de type rabattable, comprenant une partie formant socle de montage (11) reliée à une partie pivotante (20) par des moyens formant pivot, comprenant des pattes en saillie (36) sur une partie (11), venant en prise de façon amovible avec des parties formant embase (37) de l'autre partie (20), et un ressort (17) s'étendant entre lesdites parties (11, 20), amenant lesdites pattes (36) à venir en prise sur lesdites parties formant embase (37), la partie pivotante (20) comprenant un couvercle (19), une plaque d'appui de miroir (26), des moyens formant pivot universel (25) entre le couvercle (19) et la plaque d'appui (26), un miroir (27) sur la plaque d'appui (26) et un guide de levier de réglage (29) sur la plaque d'appui (26), s'étendant vers la partie formant socle (11), et la partie formant socle (11) comprenant une paroi formant embase (14), un levier de réglage (12) comprenant un bras de levier (33) s'étendant au travers de la paroi formant embase (14) et supportant une rotule (13) entre ses extrémités, portant contre ladite paroi formant embase (14), caractérisé en ce que le guide de levier de réglage (29) comprend des organes de retenue (30, 31) adjacents à son extrémité, et qu'une tête (32) sur une extrémité dudit bras de levier (33) est mobile librement dans ledit guide (29), mais retenue à l'intérieur par les parois de celui-ci et lesdits organes de retenue (30, 31).

2. Un ensemble de rétroviseur selon la revendication 1, dans lequel ledit guide de levier de réglage (29) comprend une pluralité de parois en forme de canal (31) qui définissent un canal à embouchure étroite, et lesdits organes de retenue comprennent des talons rentrants (30) sur les extrémités respectives de certaines desdites parois (31).

3. Un ensemble de rétroviseur selon la revendication 2 dans lequel ladite tête en T (32) est mobile librement dans ledit canal (29).

4. Un ensemble de rétroviseur selon la revendication 1, 2 ou 3, dans lequel ladite rotule du bras de levier (13) supporte un étrier (15) s'étendant transversalement (15), et ledit ressort est un ressort en forme de U (17), une surface (18) coopérant avec le ressort de ladite partie pivotante (20) en contact et guidant une partie intermédiaire dudit ressort (17) et les extrémités (16) dudit ressort (17) étant accouplées aux extrémités dudit étrier (15).

5. Un ensemble de rétroviseur selon la revendication 4, dans lequel ledit étrier (15) est en forme de U, comporte des branches (39) guidées pour assurer un mouvement dans ladite partie formant socle de montage (11), ledit ressort étant accouplé aux extrémités desdites branches.

6. Un ensemble de rétroviseur selon la revendication 5, dans lequel le guidage de la partie pivotante (20) après rabattement, est effectué, en partie par ladite tête en T (32), lesdites parois de canal (29, 31), ledit ressort (17) et lesdites branches (39) de l'étrier.

FIG 2

FIG 1

**FIG 4**

**FIG 3**

**FIG 5**